(19) Europäisches Patentamt
European Patent Office
Office européen des brevets

(11) Veröffentlichungsnummer: **0 377 643 B1**

(12) **EUROPÄISCHE PATENTSCHRIFT**

(45) Veröffentlichungstag der Patentschrift:
23.10.91 Patentblatt 91/43

(51) Int. Cl.$^5$: **F02B 39/12, F02B 39/04**

(21) Anmeldenummer: **88908181.6**

(22) Anmeldetag: **31.08.88**

(86) Internationale Anmeldenummer:
**PCT/EP88/00781**

(87) Internationale Veröffentlichungsnummer:
**WO 89/02521 23.03.89 Gazette 89/07**

(54) **MECHANISCHER ANTRIEB FÜR EIN LADEGEBLÄSE EINER BRENNKRAFTMASCHINE.**

(30) Priorität: 05.09.87 DE 3729890

(43) Veröffentlichungstag der Anmeldung:
18.07.90 Patentblatt 90/29

(45) Bekanntmachung des Hinweises auf die
Patenterteilung:
23.10.91 Patentblatt 91/43

(84) Benannte Vertragsstaaten:
DE FR GB IT NL SE

(56) Entgegenhaltungen:
EP-A- 0 198 312

(56) Entgegenhaltungen:
DE-A- 2 324 269
FR-A- 853 517
FR-A- 2 580 723
US-A- 1 878 210
US-A- 3 583 825
Patent Abstracts of Japan, Band 11, Nr. 158
(M-591) (2605), 22. Mai 1987

(73) Patentinhaber: ZAHNRADFABRIK
FRIEDRICHSHAFEN AKTIENGESELLSCHAFT
Löwentaler Strasse 100 Postfach 2520
W-7990 Friedrichshafen 1 (DE)

(72) Erfinder: WINKELMANN, Siegfried
Birkensteige 15
W-7992 Tettnang (DE)

## Beschreibung

Mechanischer Antrieb für ein Ladegebläse einer Brennkraftmaschine mit einem von der Kurbelwelle der Brennkraftmaschine angetriebenen Drehzahlvariator, von dessen Sekundärscheibe aus über eine elektromagnetisch betätigte Trennkupplung eine Eingangswelle eines Übersetzungsgetriebes antreibbar ist, die in einem in einem axial vorstehenden Bund des Getriebegehäuses angeordneten, doppelreihigen Kugellager gelagert ist und auf der einerseits des Kugellagers ein Eingangsrad des Getriebes befestigt ist, wobei die Trennkupplung den Bund radial umgibt und eine auf der dem Eingangsrad gegenüberliegenden Seite des Kugellagers auf der Eingangswelle befestigte Kupplungsscheibe aufweist, und mit einer ausgangsseitig am Übersetzungsgetriebe angeschlossenen Rotorwelle mit einem Rotor des Ladegebläses.

Ein mechanischer Antrieb für ein Ladegebläse einer Brennkraftmaschine der vorgenannten Gattung ist aus der Druckschrift FR-A 25 80 723 bekannt. Das zwischen der elektromagnetisch betätigten Trennkupplung und der Rotorwelle angeordnete Übersetzungsgetriebe ist dabei in Vorgelegebauweise ausgebildet. Das entsprechende Getriebegehäuse weist im Bereich der Anordnung einer Vorgelegewelle eine Ausbuchtung auf, wodurch sich die radialen Abmessungen der aus Ladegebläse und mechanischem Antrieb bestehenden Einheit vergrößern. Die Eingangswelle ist im Getriebegehäuse mittels eines zweireihigen Kugellagers gelagert und bedarf im Bereich des Eingangszahnrades des Übersetzungsgetriebes einer weiteren Lagerstelle. Zu diesem Zweck ist eine koaxial zur Rotorwelle angeordnete Buchse in das Getriebegehäuse eingesetzt, auf der die Eingangswelle mittels eines Rollenlagers geführt ist.

Der Erfindung liegt die Aufgabe zugrunde, für einen mechanischen Antrieb eines Ladegebläses einer Brennkraftmaschine der vorgenannten Gattung eine kompakte Bauweise zu erzielen, damit eine Anordnung des mechanisch angetriebenen Ladegebläses in dem zumeist sehr beengten Motorraum eines Kraftfahrzeuges ermöglicht wird. Dabei soll die Eingangswelle bezogen auf die vom An- und Abtrieb eingeleiteten Kräfte in einem günstigen Bereich unter Verwendung einfacher Mittel gelagert sein.

Diese Aufgabe wird an einem mechanischen Antrieb für ein Ladegebläse einer Brennkraftmaschine der vorgenannten Gattung nach dem kennzeichnenden Teil des Anspruchs 1 dadurch gelöst, daß das Übersetzungsgetriebe ein Planetengetriebe mit im wesentlichen zylindrischer Außenkontur seines Getriebegehäuses ist, wobei das Eingangsrad als Hohlrad ausgebildet ist, daß das Kugellager als Schrägkugellager mit einem so großen Durchmesser ausgebildet ist, daß dessen Stützabstand auf der Eingangswelle bis in den Bereich der Anordnung des Hohlrades und der Kupplungsscheibe reicht, und daß die radialen Abmessungen des zu einer Einheit zusammengefaßten Antriebes und des Ladegebläses im wesentlichen übereinstimmen.

Durch die Verwendung eines Planetengetriebes als Übersetzungsgetriebe lassen sich bei koaxialem Verlauf von Eingangs- und Rotorwelle und geringen radialen Außenabmessungen hohe Drehzahlübersetzungen erzielen, wenn der Antrieb von der Eingangswelle aus über das Hohlrad und der Abtrieb von einem Sonnenrad des Planetengetriebes erfolgen. Die Lagerung der Eingangswelle läßt sich sehr kompakt und mit großer radialer und axialer Tragfähigkeit ausbilden, wenn ein doppelreihiges Schrägkugellager mit großem Durchmesser Anwendung findet. Aufgrund seines großen Durchmessers hat das doppelreihige Schrägkugellager einen bis in den Bereich der Anordnung des Hohlrades und der Kupplungsscheibe reichenden Stützabstand auf der Eingangswelle. Entsprechend ist der Bund des Getriebegehäuses mit relativ großer radialer Abmessung ausgebildet und nimmt unmittelbar an seinem Außenumfang die elektromagnetische Betätigung der Trennkupplung auf. Somit ergibt sich insgesamt eine sehr günstige Raumausnutzung innerhalb des zu einer Einheit zusammengefaßten Antriebes des Ladegebläses.

In weiterer Ausgestaltung der Erfindung wird gemäß Anspruch 2 vorgeschlagen, das Innere des Getriebegehäuses gegenüber dem Schrägkugellager mittels einer im Getriebegehäuse befestigten Scheibe und eines auf der Eingangswelle befestigten V-förmigen Dichtringes abzudichten, dessen axiale Dichtlippe an der Scheibe anliegt. Die Verwendung eines entsprechenden Dichtringes, der auf die Eingangswelle aufgepreßt ist und sich seitlich mittels einer Dichtlippe an die im Getriebegehäuse befestigte Scheibe anlegt, ermöglicht eine günstige Abdichtung des Inneren des Getriebegehäuses gegenüber dem doppelreihigen Schrägkugellager. Unter zunehmender Zentrifugalkraft wird die Anpressung der Dichtlippe an die Scheibe reduziert, so daß während des Betriebes des Ladegebläses Reibung und folglich Wirkungsgradverluste, Verschleiß sowie Erwärmung verringert werden können.

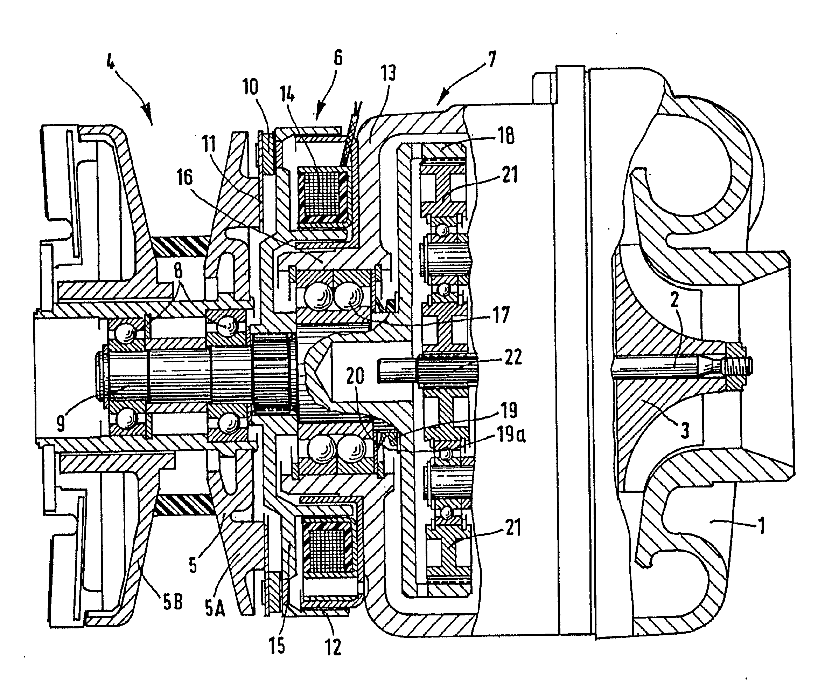

Zur weiteren Erläuterung der Erfindung wird auf die Zeichnung verwiesen, in der ein Ausführungsbeispiel zum Teil in Längsschnitten dargestellt ist.

In der einzigen Figur ist mit 1 ein Ladegebläse bezeichnet, das einen über eine Rotorwelle 2 angetriebenen Rotor 3 aufweist. Der Antrieb des Rotors erfolgt von einer nicht dargestellten Brennkraftmaschine, vorzugsweise deren stirnseitigem Abtrieb der Kurbelwelle auf eine ebenfalls nicht dargestellte Primärscheibe eines Drehzahlvariators 4. Der Drehzahlvariator 4 ist als Umschlingungsgetriebe ausgebildet, wobei von der Primärscheibe eine Sekundärscheibe 5 angetrieben wird. Die Sekundärscheibe ist trieblich über eine elektromagnetisch betätigte Trennkupplung 6 und ein als Übersetzungsgetriebe dienendes Planetengetriebe 7 mit der Rotorwelle 2 verbindbar. Dabei weist die Sekundärscheibe 5 zwei Kegelscheiben 5A und 5B auf, von denen die Kegelscheibe 5B gegenüber der Kegelscheibe 5A derart verschiebbar ist, daß sich der Auflagebereich für einen Treibriemen und damit der für die Übersetzung wirksame Durchmesser verändert. Die Sekundärscheibe 5 hat bei auseinanderliegenden Kegelscheiben 5A und 5B einen kleinen Abtriebsdurchmesser und bei weitmöglichst ineinander geschobenen Kegelscheiben 5A und 5B einen großen Abtriebsdurchmesser. Die Sekundärscheibe 5 ist über Wälzlager 8 frei drehbar auf einer Eingangswelle 9 des Planetengetriebes 7 gelagert. Dabei ist die Sekundärscheibe 5 mittels der elektromagnetisch betätigbaren Trennkupplung 6 an die Eingangswelle 9 kuppelbar.

Die elektromagnetisch betätigbare Trennkupplung 6 weist eine Ankerscheibe 10 auf, die über Einzelblattfedern 11 an der Kegelscheibe 5A befestigt ist. Ein Kupplungsgehäuse 12 ist ortsfest an einem Getriebegehäuse 13 des Planetengetriebes 7 angeordnet und nimmt einen Magnetkörper mit Spule 14 auf. Eine zwischen der Ankerscheibe 10 und dem Magnetkörper mit Spule 14 liegende Kupplungsscheibe 15 ist wiederum drehfest mit der Eingangswelle verbunden. Es erfolgt also ein Antrieb der Eingangswelle 9 bei an die Ankerscheibe 10 angekuppelter Kupplungsscheibe 15 von der Sekundärscheibe 5 aus über die eingekuppelte Trennkupplung 6 auf die Eingangswelle 9.

Das Getriebegehäuse 13 des Planetengetriebes 7 weist weiterhin einen axial vorstehenden Bund 16 auf, der zur Lagerung der Eingangswelle 9 mittels eines doppelreihigen Schrägkugellagers 17 dient. Der den Bund 16 radial umgebende Raum bis hin zur zylindrischen Außenkontur des Getriebegehäuses 13 dient zur Aufnahme der Trennkupplung 6. Unmittelbar neben dem doppelreihigen Schrägkugellager 17 ist im Getriebegehäuse ein Hohlrad 18 des Planetengetriebes 7 auf der Eingangswelle 9 befestigt. Das Innere des Getriebegehäuses 13 ist gegenüber dem Schrägkugellager 17 durch einen V-förmigen Dichtring 19, der mit einer im Getriebegehäuse 13 befestigten Scheibe 20 zusammenwirkt, abgedichtet. Zu diesem Zweck weist der Dichtring 19 eine in axialer Richtung vorstehende Dichtlippe 19A auf, die an der Scheibe 20 anliegt. Mit zunehmender Drehzahl der Eingangswelle läßt unter dem Einfluß der Zentrifugalkraft die Anpreßkraft der Dichtlippe 19A an die Scheibe 20 nach.

Der Darstellung ist zu entnehmen, daß die aus Sekundärscheibe 5, Trennkupplung 6, Planetengetriebe 7 und Ladegebläse 1 bestehende Einheit sowohl radial als auch axial sehr günstige Abmessungen hat. Die axialen Abmessungen sind dadurch reduziert, daß der Bund 16 innen das doppelreihige Schrägkugellager 17 der Eingangswelle 9 und außen die Trennkupplung 6 aufnimmt. Außerdem ist das Schrägkugellager 17 gegenüber dem Antrieb der Eingangswelle 9 über die Kupplungsscheibe 15 und dem Abtrieb über das Hohlrad 18 günstig angeordnet.

Das Hohlrad 18 treibt über Planetenräder 21 als Standgetriebe ein einstückig mit der Rotorwelle 2 ausgebildetes Sonnenrad 22 an.

Bezugszeichen

| | |
|---|---|
| 1 | Ladegebläse |
| 2 | Rotorwelle |
| 3 | Rotor |
| 4 | Drehzahlvariator |
| 5 | Sekundärscheibe |
| 5A | Kegelscheibe fest |
| 5B | Kegelscheibe verschiebbar |
| 6 | elektromagnetisch betätigte Trennkupplung |
| 7 | Planetengetriebe |
| 8 | Wälzlager |
| 9 | Eingangswelle |
| 10 | Ankerscheibe |
| 11 | Einzelblattfedern |
| 12 | Kupplungsgehäuse |
| 13 | Getriebegehäuse |
| 14 | Magnetkörper mit Spule |
| 15 | Kupplungsscheibe |
| 16 | Bund |
| 17 | doppelreihiges Schrägkugellager |
| 18 | Hohlrad |
| 19 | V-förmiger Dichtring |
| 19A | Dichtlippe |
| 20 | Scheibe |
| 21 | Planetenräder |
| 22 | Sonnenrad |

Patentansprüche

1. Mechanischer Antrieb für ein Ladegebläse (1) einer Brennkraftmaschine mit einem von der Kurbelwelle der Brennkraftmaschine angetriebenen Drehzahlvariator (4), von dessen Sekundärscheibe (5) aus über eine elektromagnetisch betätigte Trennkupplung (6) eine Eingangswelle (9) eines Übersetzungsgetriebes antreibbar ist, die in einem in einem axial vorstehenden Bund (16) des Getriebegehäuses (13) angeordneten, doppelreihigen Kugellager gelagert ist und auf der einerseits des Kugellagers ein Eingangsrad des Getriebes befestigt ist, wobei die Trennkupplung (6) den Bund (16) radial umgibt und eine auf der dem Eingangsrad gegenüberliegenden Seite des Kugellagers auf der Eingangswelle (9) befestigte Kupplungsscheibe (15) aufweist, und mit einer ausgangsseitig am Übersetzungsgetriebe angeschlossenen Rotorwelle (2) mit einem Rotor (3) des Ladegebläses (1), dadurch **gekennzeichnet** , daß das Übersetzungsgetriebe ein Planetengetriebe (7) mit im wesentlichen zylindrischer Außenkontur seines Getriebegehäuses (13) ist, wobei das Eingangsrad als Hohlrad (18) ausgebildet ist, daß das Kugellager als Schrägkugellager (17) mit einem so großen Durchmesser ausgebildet ist, daß dessen Stützabstand auf der Eingangswelle (9) bis in den Bereich der Anordnung des Hohlrades (18) und der Kupplungsscheibe (15) reicht, und daß die radialen Abmessungen des zu einer Einheit zusammengefaßten Antriebes (5, 6 und 7) und des Ladegebläses (1) im wesentlichen übereinstimmen.

2. Mechanischer Antrieb für ein Ladegebläse nach Anspruch 1, dadurch **gekennzeichnet** , daß das Innere des Getriebegehäuses (13) gegenüber dem Schrägkugellager (17) mittels einer im Getriebegehäuse (13) befestigten Scheibe (20) und eines auf der Eingangswelle (9) befestigten V-förmigen Dichtringes abgedichtet ist, dessen axiale Dichtlippe (19A) an der Scheibe (20) anliegt.

## Claims

1. A mechanical drive for a charging fan (1) of an internal combustion engine comprising a rotational speed variator (4), which is driven by the crankshaft of the internal combustion engine and and whose secondary disc (5) drives an input shaft (9) of a transmission gearing via an electromagnetically actuated separating coupling (6), the input shaft (9) being mounted in a double-row ball bearing arranged in an axially projecting collar (16) of the gear housing (13) and on which an input wheel of the gearing is secured on one side of the ball bearing, the separating coupling (6) surrounding the collar (16) radially and comprising a coupling disc (15) secured to the input shaft (9) on the side of the ball bearing opposite the input wheel, and comprising a rotor shaft (2) connected to the transmission gearing on the output side and having a rotor (3) of the charging fan (1), characterised in that the transmission gearing is a planetary gearing (7), whose gearing housing (13) has a substantially cylindrical outer contour, the input wheel being designed as a hollow wheel (18), the ball bearing is designed as an angular contact ball bearing (17) having a diameter which is so large that its supporting distance on the input shaft (9) extends into the region of the arrangement of the hollow wheel (18) and the coupling disc (15), and the radial dimensions of the drive (5, 6 and 7) combined to form a unit and of the charging fan (1) substantially correspond.

2. A mechanical drive for a charging fan according to claim 1, characterised in that the interior of the gearing housing (13) is sealed relative to the angular contact ball bearing (17) by means of a disc (20) secured in the gearing housing (13) and a V-shaped sealing ring secured on the input shaft (9), the axial sealing lip (19A) of the sealing ring resting against the disc (20).

## Revendications

1. Entraînement mécanique pour un compresseur (1) de suralimentation d'un moteur à combustion interne, comportant un variateur de vitesse (4) entraîné par le vilebrequin du moteur, et un engrenage réducteur ayant un arbre d'entrée (9) entraîné par un flasque secondaire (5) du variateur au moyen d'un embrayage (6) à commande électromagnétique, ledit arbre d'entrée étant monté dans un roulement à deux rangs de billes disposé dans un collet axial proéminent (16) du carter (13) de l'engrenage, une roue d'entrée de l'engrenage étant fixée à cet arbre d'entrée d'un côté dudit roulement, l'embrayage (6) entourant radialement ledit collet (16) et comportant un disque d'embrayage (15) fixé sur l'arbre d'entrée (9) du côté opposé à ladite roue d'entrée par rapport au roulement à billes, l'entraînement comportant un arbre de rotor (2) raccordé à la sortie de l'engrenage réducteur et à un rotor (3) du compresseur (1), caractérisé en ce que l'engrenage réducteur est un engrenage planétaire (7) pourvu d'un carter (13) à contour extérieur sensiblement cylindrique, où la roue d'entrée est formée par une roue à denture intérieure (18), en ce que le roulement à billes est formé par un roulement à disposition oblique (17) de diamètre assez grand pour que la longueur d'appui du roulement sur l'arbre d'entrée (9) atteigne les zones où se trouvent la roue à denture intérieure (18) et le disque d'embrayage (15), et en ce que les dimensions radiales de l'entraînement mécanique (5, 6 et 7), regroupé en une unité, et du compresseur (1) sont sensiblement concordantes.

2. Entraînement mécanique pour un compresseur de suralimentation selon la revendication 1, caractérisé en ce que l'intérieur du carter (13) de l'engrenage est obturé de manière étanche en regard du roulement à billes (17) au moyen d'une rondelle (20) fixée dans le carter (13) et d'un joint annulaire à profil en V qui est fixé sur l'arbre d'entrée (9) et dont une lèvre axiale d'étanchéité (19A) s'applique contre ladite rondelle (20).